# NEUE EUROPÄISCHE PATENTSCHRIFT

(11) **EP 3 417 187 B2**
(45) Veröffentlichungstag und Bekanntmachung des Hinweises auf die Entscheidung über den Einspruch: **04.06.2025**
(45) Hinweis auf die Patenterteilung: 13.01.2021
(21) Anmeldenummer: 17704754.5
(22) Anmeldetag: 10.02.2017
(51) Int. Cl.: F16D 55/226, F16D 65/097

(54) **REIBBELAGANORDNUNG MIT RÜCKSTELLFEDER ZUR LÜFTSPIELLIMITIERUNG FÜR EINE KRAFTFAHRZEUGTEILBELAGSCHEIBENBREMSE**
FRICTION LINING ASSEMBLY HAVING A RESTORING SPRING FOR LIMITING CLEARANCE FOR A MOTOR-VEHICLE PARTIALLY LINED DISK BRAKE
SYSTÈME DE GARNITURE DE FRICTION MUNI D'UN RESSORT DE RAPPEL PERMETTANT DE LIMITER LE JEU DANS UN FREIN À DISQUE À GARNITURE PARTIELLE DE VÉHICULE AUTOMOBILE

(30) Priorität: 18.02.2016 DE 102016202520
(43) Veröffentlichungstag der Anmeldung: 26.12.2018
(73) Patentinhaber: Continental Automotive Technologies GmbH, 30175 Hannover (DE)
(72) Erfinder: SALZMANN, Sebastian, 63477 Maintal (DE); PETRI, Ralph, 65843 Sulzbach/Ts. (DE); LANGER, Norman, 65760 Eschborn (DE); DENHARD, Werner, 61381 Friedrichsdorf (DE); ADAM, Thorsten, 63165 Mühlheim am Main (DE); BAUER, Jens, 63801 Kleinostheim (DE); KEIL, Christoph, 64658 Fürth (DE); LANKES, Christian, 64560 Riedstadt (DE); GOLZ, Dietrich, 65520 Bad Camberg (DE); HAAG, Mathias, 64289 Darmstadt (DE); KALFF, Christoph, 55296 Lörzweiler (DE)
(74) Vertreter: Continental Corporation
(86) Internationale Anmeldenummer: PCT/EP2017/053048
(87) Internationale Veröffentlichungsnummer: WO 2017/140598

(56) Entgegenhaltungen:
- EP-A1- 3 020 996
- DE-A1- 102012 016 737
- DE-A1- 102013 207 424
- DE-A1- 3 538 320
- DE-A1- 3 538 320
- DE-T5- 112013 004 669
- DE-U1- 202015 104 454
- FR-A1- 3 004 500
- JP-A- 2008 241 046
- JP-B2- 3 085 799
- JP-U- S56 131 038
- US-A- 4 364 455
- US-A1- 2011 168 503
- US-A1- 2012 205 205
- US-A1- 2014 367 208
- US-A1- 2014 367 208
- "Bremsenhandbuch. Grundlagen, Komponenten, Systeme, Fahrdynamik", 1 January 2012, SPRINGER VIEWEG, article BREUER BERT, BILL, K. H.: "Kapitel 7: Aufbau und Komponenten von Pkw-Bremsanlage", pages: 113 - 163, XP055866631

## Beschreibung

Die Erfindung betrifft eine Reibbelaganordnung mit einer Rückstellfeder aus Blech zur Lüftspieleinstellung für eine Kraftfahrzeugteilbelagscheibenbremse vom Faustsatteltyp umfassend einen fahrzeugfesten Bremshalter, an dem beiderseits einer zugehörigen Bremsscheibe angeordnete Reibbelaganordnungen verschiebbar geführt sind, mit einem die Bremsscheibe sowie die Reibbelaganordnungen übergreifenden Gehäuse inclusive Aktuatorik, das verschiebbar am Bremshalter gelagert ist, und wobei die Rückstellfeder, zwischen dem Bremshalter und der Reibbelaganordnung eingespannt ist, die Rückstellfeder an einer Rückenplatte der Reibbelaganordnung fixiert ist, und sich mit einem Federschenkel axial federnd elastisch am Bremshalter abstützt.

Faustsattelscheibenbremsen vom Teilbelagtyp mit gezogenen Reibbelaganordnungen sind grundsätzlich bekannt - vgl. Breuer/Bill, Bremsenhandbuch, IS-BN-13 978-3-8348-0064-0, 3. Auflage September 2006, Vieweg Verlag, Seite 99, Bild 7-14.

Die Bemessung vom vorgegebenen, definierten Lüftspiel ist im Bereich der Reibbelaganordnungen für den Betrieb sämtlicher Kraftfahrzeugscheibenbremsen von zunehmend wichtiger Bedeutung. Denn damit beim ungebremsten Kraftfahrzeugfahrzeugfahrbetrieb keine Restbremsmomente wirken, soll der Reibwerkstoff der Reibbelaganordnung die Bremsscheibe nicht berühren. Daraus resultiert die theoretische Anforderung, dass der Reibwerkstoff im gelösten Zustand unter Einbezug sämtlicher Verschleißmaße (Reibwerkstoff und Bremsscheibenverschleiß) automatisch einen definierten sowie einheitlich vorgegebenen Abstand zur Bremsscheibe einhalten sollte. Dieser Abstand wird Lüftspiel genannt. Zu groß bemessenes Lüftspiel führt zu langen Bremspedalwegen, zu klein bemessenes Lüftspiel führt zu Restbremsmomenten und dadurch zu unnötig erhöhtem Energieverbrauch. Korrosion und Verschmutzung verstärken die Lüftspielproblematik in der Praxis.

Auch die US2014/367208 A1 zeigt eine gattungsgemäße Reibbelaganordnung.

Demzufolge sind Reibbelaganordnungen bekannt, die reibbelagfeste Rückstellfedern zur Lüftspieleinstellung aus Blech entsprechend der DE 102 38 734 A1 vorsehen. Demnach ist die Rückstellfeder mit einem Basisabschnitt auf einer reibwerkstoffabgewandten Rückseite einer Rückenplatte der Reibbelaganordnung unlösbar fixiert. Ein elastischer Federschenkel ist stets entweder bogenförmig nach radial aussen oder bogenförmig nach tangential aussen gekrümmt arrangiert. Weiterhin ist die Rückstellfeder über ein gesondertes Belagführungselement, das ebenfalls aus Blech besteht, mittelbar eingespannt sowie am Bremshalter verriegelt, so dass Steinschlagschutz vorliegt, und zudem eine aufwändige Bearbeitung des Bremshalters eingespart ist. Weiterhin sind die Rückenplatten der Reibbelaganordnungen im Bremshalter gedrückt abgestützt (push-Abstützung). In ganz besonders bevorzugten Varianten verfügt die Rückstellfeder zwecks Vermeidung der Kippneigung über zwei symmetrisch angreifende Federschenkel. Das Belagführungselement kann zudem eine Lasche aufweisen, die in eine Öffnung im Federschenkel eingreift. Die bekannte Rückstellfeder ermöglicht es leider nicht, das Lüftspiel reibwerkstoffverschleißabhängig konstant zu bemessen. Vielmehr wird bei diesem Konzept mit zunehmendem Verschleiß von Reibwerkstoff und Bremsscheibe ein zunehmendes Lüftspiel realisiert, nachdem der Federarm immer gleich anliegt. Daher werden Restbremsmomente zwar für alle Fälle vollumfänglich sicher vermieden, aber gleichzeitig wird mit zunehmendem Reibwerkstoffverschleiß ein verlängerter Pedalweg infolge vergrößertem Leerweg bewirkt.

Es ist eine Aufgabe von der vorliegenden Erfindung, eine neue und verbesserte Weiterbildung einer Reibbelaganordnung mit Rückstellfeder zur reibwerkstoffverschleißabhängigen Lüftspielbemessung vorzulegen, welche die Nachteile bekannter Anordnungen vermeiden hilft, also den Pedalweg nicht beeinträchtigt, und bei robuster Funktion über eine reduzierte Komplexität zwecks rationeller Fertigung und einfache Montage verfügt.

Das Grundprinzip der Merkmalskombination nach der vorliegenden Erfindung beinhaltet wenigstens eine Reibbelaganordnung wie in Anspruch 1 definiert, mit daran fixierter Rückstellfeder deren Federarm eine hammerkopfförmige Klaue übergreift, und wobei der Federarm infolge Reibverschleiß von Reibwerkstoff und/oder Bremsscheibe unter Bremsbetätigung gezielt plastisch deformierbar vorgesehen ist, damit die Rückstellfeder der Reibbelaganordnung ein dosiertes sowie konstant bemessenes, vorgegebenes Lüftspiel aufprägt. Kurz gesagt ist erfindungsgemäß durch definiert platzierten Angriff einschließlich Deformationseigenschaft vom Federarm der Rückstellfeder erstmals eine automatische Bemessung vom Lüftspiel bei diesen Reibbelaganordnungen realisiert, was der gestellten Aufgabe vollständig Rechnung trägt. Die vorliegende Erfindung distanziert sich also diametral vom Vorurteil, dass sich eine Feder von einer Reibbelaganordnung während dem normalen Gebrauch grundsätzlich nicht plastisch deformieren soll.

Weitere Einzelheiten der Erfindung auch die verschiedenen Ausführungsformen werden im Einzelnen zusammen mit der Zeichnung anhand der Figuren näher beschrieben.

In der Zeichnung zeigt:
Fig. 1a + 1b eine bekannte Schwimmsattelscheibenbremse mit reibbelagfester Rückstellellfeder aus Blech, zur grundsätzlichen Erläuterung nach der DE 102 38 734 A1,
Fig. 2 + 3 perspektivisch sowie im Ausschnitte eine Faustsattelscheibenbremse mit einer Rückstellfeder mit Sicht von vorne und von hinten gemäß einer ersten Ausführungsform,
Fig. 4 die Rückstellfeder aus Fig. 2 + 3 als Einzelteil, perspektivisch,
Fig. 5 + 6 perspektivische Ausschnitte einer nicht erfindungsgemäßen Faustsattelscheibenbremse mit einer Rückstellfeder mit Sicht von vorne und von hinten, und
Fig. 7 + 8 perspektivische Ausschnitte einer Faustsattelscheibenbremse mit einer Rückstellfeder mit Sicht von vorne und von hinten gemäß einer zweiten Ausführungsform.

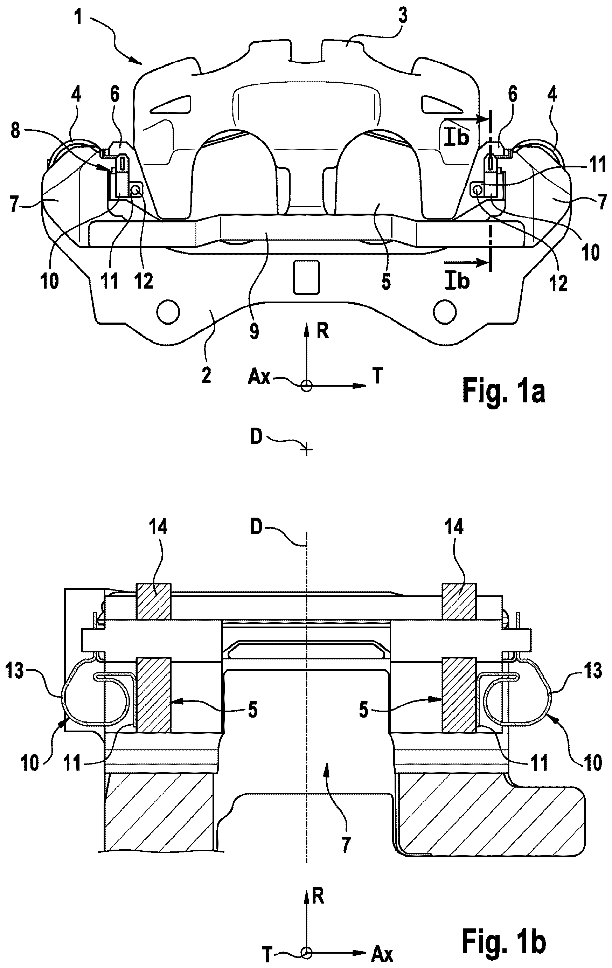

Eine bekannte Kraftfahrzeugteilbelagscheibenbremse 1 umfasst nach Fig. 1a, b einen fahrzeugfesten Bremshalter 2, an dem ein Gehäuse 3 mit Aktuatorik axial verschiebbar aber drehfest gelagert ist. Zur axial relativverschiebbaren Lagerung vom Gehäuse 3 verfügt der Bremshalter 2 über zwei Bolzenführungen 4. Das Gehäuse 3 übergreift dabei einen nicht gezeigten drehbaren Rotor, insbesondere Bremsscheibe, sowie beiderseits (innenbords, außenbords) der Bremsscheibe angeordnete Reibbelaganordnungen 5. Die beiden Reibbelaganordnungen 5 wiederum sind mit tangential seitlich abstehenden Vorsprüngen 6 axial verschiebbar sowie drehfest in Aufnahmemulden von Führungsprofilen 8 des Bremshalters 2 geführt und tangential "gedrückt" abgestützt. In diesem Zusammenhang beziehen sich sämtliche Richtungsangaben jeweils auf eine gedachte Raddrehachse D incl. Rotor- bzw. Bremsscheibendrehachse, beziehungsweise das verdeutlichte Koordinatensystem. Im Einzelnen verfügt der Bremshalter 2 über zwei Halterarme 7, welche die Bremsscheibe übergreifen, und die Aufnahmemulden mit Führungsprofil 8 für die Vorsprünge 6 inkorporieren. In bzw. an den Halterarmen 7 sind die Reibbelaganordnungen 5 über das Führungsprofil 8, das die Aufnahmemulden ausprägt, drehfest geführt aufgenommen. Zur Erhöhung der Steifigkeit der Halterarme 7 sind deren freie Enden durch einen Steg 9 miteinander verbunden. Zur Verbesserung des Lüftverhaltens einer derartigen Kraftfahrzeugteilbelagscheibenbremse 1, d. h. der selbsttätig automatischen Einstellung eines definierten Lüftspieles zwischen der Bremsscheibe und den Reibbelaganordnungen 5 nach dem Lösen, ist an jeder Reibbelaganordnung 5 zumindest eine, besser zwei Rückstellfedern 10 vorgesehen, die als Blechbauteil aus Flachwerkstoff spanlos umgeformt vorgesehen sind.

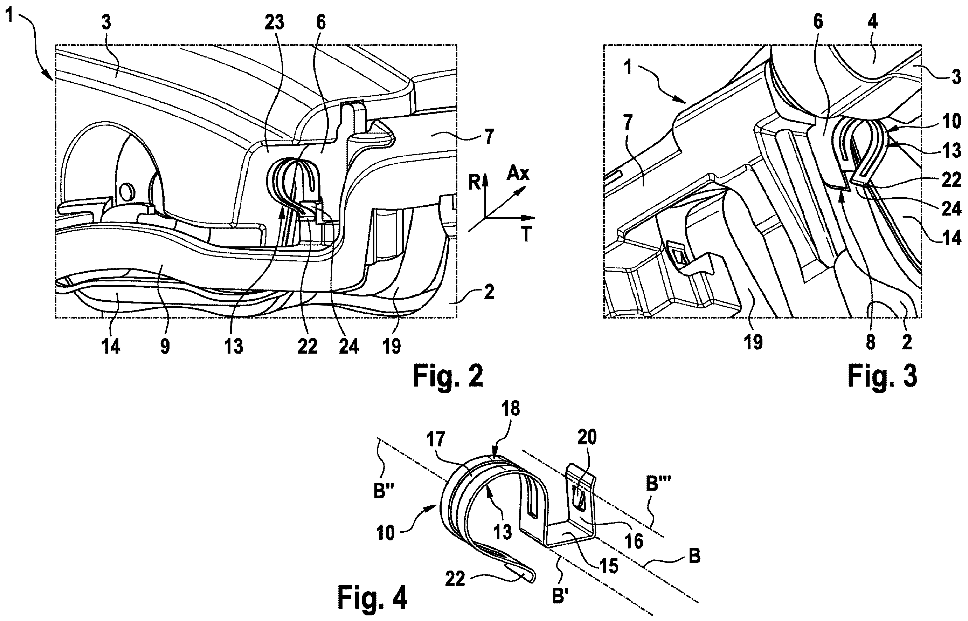

Nachstehende Beschreibung bezieht sich auf die konkreten Lösungen der Ausführungsformen in den Fig. 2 - 4 und 7 - 8, wobei zur Übertragung von den Bremsumfangslasten sämtliche Reibbelaganordnungen 5 im Unterschied zur DE 102 38 734 A1 mit hammerkopfförmigen Klauen 6 in dem Führungsprofil 8 vom Bremshalter 2 gezogen, also an der jeweils einlaufseitigen Klaue 6, gezogen aufgehängt abgestützt sind, sodass dadurch eine Zugbeanspruchung in der Rückenplatte 14 vorliegt.
In sämtlichen Ausführungsbeispielen der Fig. 2-4 und 7 - 8 sind an jeder Reibbelaganordnung 5 jeweils zwei Rückstellfedern 10 aus Stahlblech fixiert vorgesehen, deren Federschenkel 13 die hammerkopfförmigen Klauen 6 übergreifen. Grundsätzlich ist jede Rückstellfeder 10 axial zwischen der Reibbelaganordnung 5 und dem Bremshalter 2 bzw. dem Halterarm 7 wirksam. Das Gehäuse 3 ist demzufolge in den Kraftfluss der Rückstellfeder 10 nicht einbezogen. Die Rückstellfeder 10 übt demnach eine axiale Federkraftkomponente auf die Reibbelaganordnung 5 aus, indem die Rückstellfeder 10 die Reibbelaganordnung 5 beim Lösen der Kraftfahrzeugteilbelagscheibenbremse 1 von der zugehörigen Bremsscheibenoberfläche aktiv wegzieht. Jede der in den Figuren dargestellten Rückstellfedern 10 ist mit der jeweiligen Reibbelaganordnung 5 verbunden und stützt sich axial gegenüber dem Bremshalter 2 ab.

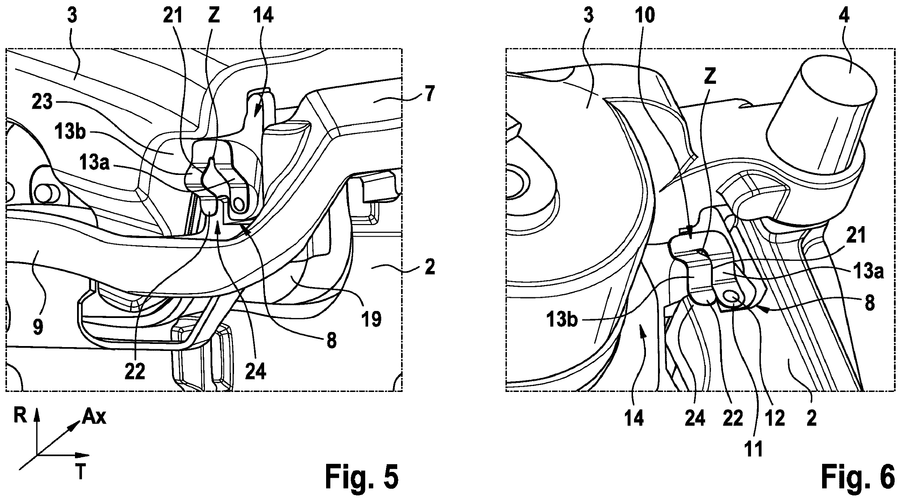

Gemäß der ersten Variante nach den Figuren 2 - 4 verfügt die Rückstellfeder 10 über eine Haltelasche 16 die reibmassenseitig an der Rückenplatte 14 angreift und in Gleitkufe 15 bzw. Federschenkel 13 überführt ist, so dass die hammerkopfförmige Klaue 6 zumindest teilweise über- bzw. umgriffen ist, und wobei die Rückenplatte 14 zwischen Haltelasche 16 und Federschenkel 13 von der Rückstellfeder 10 nach Art einer Wäscheklammer einspannbar ist. Mit anderen Worten bildet der u- oder c-förmig gebogene Abschnitt zwischen Haltelasche 16 und Federschenkel 13 einen integralen Befestigungsclip aus, welcher geeignet ist, die Rückenplatte 14 wäscheklammerartig einzuspannen. Also ist die Rückstellfeder 10 mit einem integralen Befestigungsclip grundsätzlich demontierbar an der Rückenplatte 14 fixiert. Für besonders anspruchsvolle Befestigungsfälle ist es jedoch möglich, dass der Basisabschnitt 11 zusätzlich unlösbar an der Rückenplatte 14 befestigt ist. Dafür eignet sich mit Vorteile reibwerkstoffseitig eine zusätzliche Befestigungsstelle 12 wie insbesondere ein Niet bzw. eine gegenseitige Durchsetz-, Verstemm- oder Einprägebearbeitung zwischen Rückenplatte 14 und Basisabschnitt 11 wie dies in der Zeichnung der nicht erfindungsgemäßen Fig. 5 +6 offenbart ist. Grundsätzlich sind jedoch auch andere, ergänzende also zusätzliche stoff-, kraft- oder formschlüssige Fixierungen an der Rückenplatte 14 denkbar, ohne die Erfindung zu verlassen.

Es ist ein übereinstimmendes Merkmal sämtlicher Ausführungsformen, dass der Bremshalter 2 durch ein freies Ende 22 vom Federschenkel 13 unmittelbar direkt beaufschlagt ist. Die Biegung beziehungsweise Krümmung vom Federschenkel 13 ist bei sämtlichen Ausführungsformen der Erfindung stets nach innen also zur Raddrehachse gerichtet ausgeformt. Gemäß der ersten Ausführungsform in Fig. 2-4 ist der Federschenkel 13 nach radial unten gekrümmt umgebogen, also quasi abwärts gewickelt gestaltet, so dass dadurch das natürliche Abtropfverhalten von Flüssigkeiten besonders günstig beeinflusst ist, und gleichzeitig eine Nische 23 im Gehäuse 3 zur Integration vom Federschenkel 13 ausgenutzt wird. Demzufolge wird ein verbesserter Selbstreinigungseffekt der Rückstellfeder 10 erzielt und diese Gestaltung ist besonders resistent gegen Verschmutzung, Korrosion und Verschleiß im Führungssystem der Reibbelaganordnungen 5. Die bevorzugte erste Variante gewährleistet zudem einen maximalen Federweg unter vorteilhafter Anpassung an die hammerkopfförmigen Klauen 6 in Verbindung mit einem Steg 9 zwischen Halterarmen 7.

Wie bereits angesprochen um- bzw. übergreift der Federschenkel 13 vorzugsweise ein Zentrum Z der hammerkopfförmigen Klaue 6, und um ein besonders gleichmäßiges Zurückziehen der Reibbelaganordnung 5 zu ermöglichen, kann die Krafteinleitung durch das freie Ende 22 ebenfalls zentrumsnah also in Schwerpunktnähe der Reibbelaganordnung 5 beziehungsweise zentral in Schwerpunktnähe vom Führungsprofil 8 im Bremshalter 2 erfolgen. Zur zusätzlichen Reduzierung irgendeiner Kippneigung der Reibbelaganordnung 5 in Relation zu dem Bremshalter 2 ist die Befestigungsstelle 12 der Rückstellfeder 10 nach radial innen, also in Richtung zur Raddrehachse D versetzt, am Halterarm 7 abgesenkt ausbildbar, und wobei das freie Ende 22 ein vorstehendes Widerlager 23 am Bremshalter 2 übergreifen darf.

Die Einzelheiten der vorteilhaften Rückstellfeder 10 gemäß erster Ausführungsform nach Fig. 2 + 3 sind der Fig. 4 zu entnehmen. An den radial einwärts also nach unten bogenförmig gekrümmt abgebogenen Federschenkel 13 mit freiem Ende 22 schließt sich zuerst eine axial gerichtet angeordnete Gleitkufe 15 und danach die radial ausgeprägte Haltelasche 16 an, und wobei ein stark vereinfachter Aufbau vorliegt, weil sämtliche Biegeachsen B, B', B" für die aufeinanderfolgenden Biegeoperationen der Rückstellfeder 10 zueinander parallel arrangiert sind. Der Federschenkel 13 kann zudem mehrfach gelocht oder in Längsrichtung mit einem einzigen durchgehenden Durchbruch 17 versehen sein, um die Federsteifigkeit einzustellen. Der Durchbruch 1 darf sich in Abhängigkeit von der gewählten Werkstoffqualität prinzipiell über die gesamte Krümmung vom Federschenkel 13 erstrecken, damit die Krümmung vom Federschenkel 13 unter gegenseitig ausbalaciertem plastischem Deformationsanteil und elastischem Rückstellweganteil möglichst stufenlos an das jeweilige Verschleißstadium vom Reibwerkstoff angepasst ist. An Stelle oder ergänzend zu dem Durchbruch 17 kann der Federschenkel 13 alternativ, bereichsweise oder komplett, mit einer oder mehreren Sicke oder sonstiger Profilierung 18 versehen sein, welche geeignet ist, die Federsteifigkeit sowie das elasto-plastische Verhalten vom Federschenkel 13 nach Wunsch an das Verschleißverhalten des Reibwerkstoffs 19 in Kooperation mit den sonstigen Randbedingungen des Systems nach Wunsch anzupassen, also zu modellieren. Besonders bevorzugt ist die Profilierung 18 oder Sicke in einem Kaltpressverfahren in das Stahlblech der Rückstellfeder 10 eingeprägt, so dass infolge Kaltverfestigungseffekte vom Stahlwerkstoff eine günstige Selbsthärtung in dem Federschenkel 13 erzielt ist. Demzufolge kann das elasto-plastische Verhalten vom Federschenkel 13 nach Wunsch in Abhängigkeit vom Umformgrad bei der Fertigung der Profilierung 18 eingestellt also dosiert werden. Es wird an dieser Stelle ausdrücklich darauf hingewiesen, dass eine gezielte sowie automatische, plastische Deformation vom Federschenkel 13 in Abhängigkeit vom Verschleißgrad des Reibwerkstoffs 19 über die Lebensdauer der Reibbelaganordnungen 5 erwünscht ist. Durch diese Maßnahme wird für jeden Verschleißzustand jeweils eine passende sowie automatische Lüftspielbemessung realisiert. Es versteht sich, dass die oben geschilderten Maßnahmen zur abschnittweisen Änderung vom Federverhalten im Wesentlichen entsprechend auf den Abschnitt vom Befestigungsclip übertragen werden kann, nur mit dem Unterschied dass in jedem Fall von irgendeiner plastischen Deformation im Bereich vom Befestigungsclip ausdrücklich Abstand genommen ist.

Durch Zwischenlage der genannten Gleitkufe 15 wird eine erleichterte Verschieblichkeit der Reibbelaganordnung 5 in Relation zur radialen Auflage am Halterarm 7 bewirkt. Die Haltelasche 16 kann mit einem abgekröpften sowie federelastischen Sicherungsschenkel 20 versehen sein, welcher nach Art eines Widerhakens formschlüssig in eine zugeordnete Ausnehmung in der Rückenplatte 14 eingreifen darf. Dabei versteht es sich, dass diese ergänzenden Fixierungsmittel zusätzlich zur wäscheklammerartigen Einspannung zwischen Federschenkel 13 und Haltelasche 16 vorliegen, um dadurch eine sichere und dennoch sicher montierbare, wie auch auswechselbare Variante zur Fixierung zwischen Rückstellfeder 10 und Reibbelaganordnung 5 zu ermöglichen.

Der Federschenkel 13 darf für alle Ausführungsformen grundsätzlich unmittelbar mit seinem freien Ende 22 direkt, also kostengünstig, auf einem Widerlager 24 (das einen Sitz mit unbearbeiteter Gussoberfläche vom Bremshalter 2 inkorporieren kann) aufsitzen. Fig. 5 und 6 ist nicht erfindungsgemäß. Dabei ist herstellungstechnisch ein quaderförmiger Flachblechzuschnitt mit einem seitlichen und etwa mittig verlaufenden Einschnitt 21, Freischnitt beziehungsweise Schlitz versehen, um dadurch zwei miteinander verbundene, parallel verlaufende und etwa gleichstarke Federschenkel 13a,b zu erzeugen, welche gegeneinander rhombus- oder rautenförmig aufgespreizt, sowie mithin zueinander abgewinkelt umgebogen sein dürfen, wie aus der Fig. ersichtlich. Dabei können mit Vorteil ebenfalls die beschriebenen Kaltverfestigungseffekte ausgenutzt werden. Fig. 5 + 6 ist zudem in eine Nische 23 vom Gehäuse 3 versenkt integriert. Im Unterschied zu den Ausführungsformen nach Fig. 2-4 und 7-8 übergreift die Rückstellfeder 10 nach Fig. 5 + 6 aber ausschließlich einen Teil von der Rückseite der Rückenplatte 14, ist ausschließlich auf der Rückseite der Rückenplatte 14 anhand vom Basisabschnitt 11 unlösbar befestigt und umgreift die Rückenplatte 14 keineswegs, was den Blechverbrauch begrenzt. Für diese axial besonders verdichtete Bauform kann sich eine Bearbeitung vom Sitz am Bremshalter 2 zur definierten Anlage vom freien Ende 22 des Federschenkels 13b besonders empfehlen. Ein wesentlicher Vorteil dieser Gestaltung ist die maximiert rationelle Werkstoffausnutzung vom Flachblechwerkstoff bei geringstmöglicher axialer Bauhöhe, so dass bei geringfügig erhöhtem Aufwand ein optimiertes Kosten-Nutzenverhältnis zur Ausbildung einer effektiven und gleichzeitig miniaturisierten Rückstellfeder für besonders kritische Einbauräume erzielt wird.

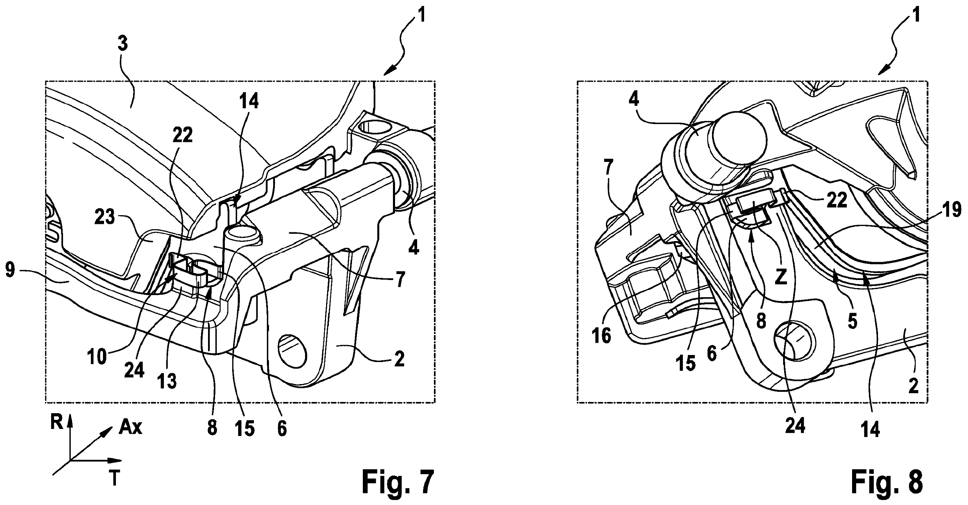

Die zweite Ausführungsform nach Fig. 7 + 8 kombiniert einige Merkmale der ersten Variante. Dabei ähnelt der mäanderförmig sowie flach angeschmiegt umgebogene, prinzipiell u-förmig gestaltete Federschenkel 13 mit der Platzierung in der Nische 23 grundsätzlich der zweiten Variante, integriert aber zusätzlich die Befestigungsclipfunktion, so dass insgesamt wieder eine auswechselbare Rückstellfeder 10 vorgegeben ist, die Haltelasche 16, Gleitkufe 15 und Federschenkel 13 umfasst, und wobei die Rückenplatte 14 am distalen Ende von der hammerkopfförmigen Klaue 6 von der Haltelasche 16 federnd (wäscheklammerartig) umgriffen ist. Dabei verläuft der angeschlossene Federschenkel 13 jedoch nicht radial gerichtet (vgl. Fig. 2-4) sondern tangential gerichtet - also in Umfangsrichtung gestreckt - zur Rückenplatte 14 ausgerichtet. Eine Profilierung 18 oder Lochung vom Federschenkel 13 ist wie vorstehend erläutert entsprechend möglich, um das elasto-plastische Deformationsverhalten der Rückstellfeder zu modellieren. Ein oder mehrere Durchbrüche 17 sind ebenfalls möglich. Im Vergleich mit der ersten Ausführungsform ist der Federschenkel 13 jedoch mehrfach schlaufen- beziehungsweise mänderartig umgebogen. Insbesondere kann der Federschenkel doppelt S-förmig gebogen also künstlich deutlich verlängert vorgesehen sein, was dessen Federeigenschaft sowie insbesondere eine elastisch und/oder plastisch vorgehaltene Wegreserve in dieser Rückstellfeder 10 ermöglicht, um einen vergleichsweise großen Verschleiß weg vom Reibwerkstoff 19 auszugleichen. Durch diese einerseits gesteigerte, gespeicherte Federwegreserve und die andererseits dennoch flach und geschützt in die Umgebung zwischen Bremshalter 2, Gehäuse 3 und Reibbelaganordnung 5 in eine Nische 23 eingebettete Federgestaltung wird eine robuste Konstruktion erhalten, die sich besonders für Steinschlagbeanspruchung wie insbesondere die rauhen Off-Road-Applikationen von SUV-Kraftfahrzeugen (Sport-Utility-Vehicle) empfiehlt. Die Ausrichtung des Federschenkels 13 ist in Relation zur Rückenplatte 14 auch verändert. Denn im Vergleich mit der Fixierung und Ausrichtung vom bogenförmigen Federschenkel 13 in der ersten Variante (Fig. 2-4) ist der mänderförmige Federschenkel 13 in der zweiten Variante (Fig. 7 + 8) am distalen Ende der Klaue 6 gewissermaßen um 90° verdreht also tangential an die Rückenplatte 14 der Reibbelaganordnung 5 angelegt appliziert. Dadurch empfiehlt sich die zweite Variante für all diejenigen, verstärkten, Reibbelaganordnungen 5 mit hammerkopfförmigen Klauen 6 deren Rückenplattenrückseite für Federfixierungen eingeschränkt ausnutzbar ist, weil beispielsweise eine oder mehrere Erhebungen nach dem Vorbild von der EP 1 217 247 B1 vorliegen.

- 1: Kraftfahrzeugteilbelagscheibenbremse
- 2: Bremshalter
- 3: Gehäuse
- 4: Bolzenführung
- 5: Reibbelaganordnung
- 6: Klaue
- 7: Halterarm
- 8: Führungsprofil
- 9: Steg
- 10: Rückstellfeder
- 11: Basisabschnitt
- 12: Befestigungsstelle
- 13: Federschenkel
- 14: Rückenplatte
- 15: Gleitkufe
- 16: Haltelasche
- 17: Durchbruch
- 18: Profilierung
- 19: Reibwerkstoff
- 20: Sicherungsschenkel
- 21: Einschnitt
- 22: Ende
- 23: Nische
- 24: Widerlager

- Ax: Axialrichtung
- B, B', B": Biegeachse
- D: Raddrehachse
- R: Radialrichtung
- T: Tangentialrichtung
- Z: Zentrum

## Patentansprüche

1. Reibbelaganordnung (5) mit einer Rückenplatte (14) und mit einer daran fixierten Rückstellfeder (10) aus Blech, für eine Kraftfahrzeugteilbelagscheibenbremse (1) vom Faustsatteltypmit einem fahrzeugfesten Bremshalter (2), an dem beiderseits einer Bremsscheibe angeordnete Reibbelaganordnungen (5) verschiebbar geführt sind, mit einem die Bremsscheibe sowie die Reibbelaganordnungen (5) übergreifenden Gehäuse (3), das verschiebbar am Bremshalter (2) gelagert ist, und wobei die Rückstellfeder (10), axial zwischen Bremshalter (2) und Reibbelaganordnung (5) mit wenigstens einem Federschenkel (13) so einspannbar ist, dass die Rückstellfeder (10) der Reibbelaganordnung (5) Lüftspiel aufprägt, **dadurch gekennzeichnet, dass** der Federschenkel (13) eine hammerkopfförmige Klaue (6) der Rückenplatte (14) übergreift, die hammerkopfförmige Klaue (6) in einem Führungsprofil (8) vom Bremshalter (2) gezogen , also an der einlaufseitigen Klaue (6) gezogen aufgehängt abgstützt ist, sodass dadurch eine Zugbeanspruchung in der Rückenplatte (14) vorliegt, und wobei der Federschenkel (13) infolge Reibwerkstoffdickenreduktion unter Bremsbetätigung definiert plastisch deformierbar ausgebildet ist, so dass die Reibbelaganordnung (5) ein konstant bemessenes Lüftspiel aufgeprägt erhält, und der Federschenkel (13) über eine Profilierung (18) wie insbesondere über eine oder mehrere Sicken und/oder über wenigstens einen Durchbruch (17) zur abschnittsweisen Abänderung vom elasto-plastischen Federverhalten des Stahlblechwerkstoffs verfügt.

2. Reibbelaganordnung (5), nach Anspruch 1, **dadurch gekennzeichnet, dass** der Federschenkel (13) ein Zentrum Z der Klaue (6) übergreift.

3. Reibbelaganordnung (5), nach Anspruch 1 oder 2, **dadurch gekennzeichnet, dass** der Federschenkel (13) über ein freies Ende (22) verfügt, das unmittelbar direkt unter elastischer Vorspannung am Widerlager (24) vom Bremshalter (2) aufsitzt.

4. Reibbelaganordnung (5), nach einem oder mehreren der vorhergehenden Ansprüche 1-3, **dadurch gekennzeichnet, dass** die Rückstellfeder (10) über Biegeachsen B, B', B" verfügt, welche zur Biegeausbildung von Federschenkel (13), Haltelasche (16), Gleitkufe (15), Sicherungsschenkel (20) an der Rückstellfeder (10) zueinander parallel gerichtet vorgesehen sind.

5. Reibbelaganordnung (5), nach Anspruch 4, **dadurch gekennzeichnet, dass** die Biegeachsen B, B', B'' tangential gerichtet vorgesehen sind.

6. Reibbelaganordnung (5), nach einem oder mehreren der vorhergehenden Ansprüche 3 bis 5, **dadurch gekennzeichnet, dass** ein halterseitiger Sitz für das freien Ende (22) vom Federschenkel (13) nach radial einwärts, in Richtung zur Raddrehachse D versetzt sowie am Halterarm (7) oder Steg (9) am Widerlager (24) axial versenkt ausgebildet ist.

7. Reibbelaganordnung (5), nach Anspruch 6, **dadurch gekennzeichnet, dass** das freie Ende (22) vom Federschenkel (13) auf dem Widerlager (24) mit dem Sitz aufsitzt, dass das Widerlager (24) und/oder der Sitz in wenigstens eine Richtung erhaben ausgebildet ist, und wobei das Widerlager (24) zumindest teilweise von dem Federschenkel (13) übergriffen ist.

8. Reibbelaganordnung nach einem oder mehreren der vorhergehenden Ansprüche, **dadurch gekennzeichnet, dass** die Rückstellfeder (10) zumindest abschnittsweise durch Kaltumformung vom Stahlblechwerkstoff kaltverfestigt ausgebildet ist.

9. Reibbelaganordnung nach einem oder mehreren der vorhergehenden Ansprüche, **dadurch gekennzeichnet, dass** die Rückstellfeder (10) zur lösbaren Fixierung an der Rückenplatte (14) einen elastischen Befestigungsclip beinhaltet, welcher zumindest einen Teil vom Federschenkel (13), eine Gleitkufe (15) und eine Haltelasche (16) aufweist, und wobei der Befestigungsclip die Rückenplatte (14) zumindest teilweise umgreift sowie federnd einspannt.

10. Reibbelaganordnung nach einem oder mehreren der vorhergehenden Ansprüche, **dadurch gekennzeichnet, dass** die Rückstellfeder (10) als im Wesentlichen quaderförmiger Flachblechzuschnitt mit einem seitlich offenen und etwa entlang einer Symmetrieachse mittig erstreckten Einschnitt (21) ausgebildet ist, so dass der Einschnitt (21) zwei verbundene, zueinander parallel verlaufende sowie etwa gleichstarke Federschenkel (13a,b) definiert.

11. Reibbelaganordnung nach einem oder mehreren der vorhergehenden Ansprüche, **dadurch gekennzeichnet, dass** der Federschenkel (13) nach Einbau in einer Nische (23) vom Gehäuse (3) versenkt angeordnet ist.

12. Reibbelaganordnung nach einem oder mehreren der vorhergehenden Ansprüche, **dadurch gekennzeichnet, dass** der Federschenkel (13) mäanderförmig gewunden, wie insbesondere doppelt-S-förmig gekrümmt, sowie in Tangentialrichtung T im Wesentlichen parallel zur Rückenplatte (14) gerichtet ist, und wobei der Befestigungsclip an einem distalen Ende von der Klaue (6) an der Rückenplatte (14) fixiert ist.

13. Faustsattelscheibenbremse mit Bremshalter (2) und Gehäuse (3) sowie umfassend eine Reibbelaganordnung (5) mit Rückstellfeder (10) einschließich den Merkmalen von einem oder mehreren der vorhergehenden Patentansprüche 1 - 12, **dadurch gekennzeichnet, dass** der gezielt elasto-plastisch deformierbar vorgesehene Federschenkel (13) der Rückstellfeder (10) zwischen Rückenplatte (14) der Reibbelaganordnung (5) und Bremshalter (2) derart eingespannt ist, dass die Reibbelaganordnung (5) automatisch permanent ein konstant bemessenes Lüftspiel aufgeprägt erhält.

## Claims

1. Friction lining assembly (5) having a backing plate (14) and having a restoring spring (10) of sheet metal that is fixed thereto, for a motor vehicle partially lined disc brake (1) of the sliding-calliper type having a brake holder (2) which is fixed with respect to the vehicle, on which brake holder friction lining assemblies (5) arranged on both sides of a brake disc are displaceably guided, and having a housing (3), which engages over the brake disc and the friction lining assemblies (5) and is displaceably mounted on the brake holder (2), and wherein the restoring spring (10) can be clamped axially between the brake holder (2) and the friction lining assembly (5) by means of at least one spring leg (13) such that the restoring spring (10) applies a release clearance to the friction lining assembly (5), **characterized in that** the spring leg (13) engages over a hammerhead-shaped claw (6) of the backing plate (14), the hammerhead-shaped claw (6) is supported in such a way that it is suspended under tension in a guide profile (8) of the brake holder (2), i.e. the tension is applied to the claw (6) on the entry side, with the result that there is a tensile stress in the backing plate (14), and wherein the spring leg (13) is designed to be plastically deformable in a manner defined under breaking actuation as a result of a reduction in the thickness of the friction material, with the result that a constantly dimensioned release clearance is imposed on the friction lining assembly (5), and the spring leg (13) has a profiling (18), such as, in particular, one or more beads and/or at least one aperture (17) for the sectional modification of the elastoplastic spring behaviour of the steel sheet material.

2. Friction lining assembly (5) according to Claim 1, **characterized in that** the spring leg (13) engages over a centre Z of the claw (6).

3. Friction lining assembly (5) according to Claim 1 or 2, **characterized in that** the spring leg (13) has a free end (22) which rests immediately and directly, under elastic preload, on the counterbearing (24) of the brake holder (2).

4. Friction lining assembly (5) according to one or more of the preceding Claims 1-3, **characterized in that** the restoring spring (10) has bending axes B, B', B", which are provided in parallel alignment with one another on the restoring spring (10) for the flexible formation of the spring leg (13), the holding tab (16), the sliding shoe (15) and the retaining leg (20).

5. Friction lining assembly (5) according to Claim 4, **characterized in that** the bending axes B, B'**,** B" are provided in a tangential orientation.

6. Friction lining assembly (5) according to one or more of the preceding Claims 3 to 5, **characterized in that** a seat, situated on the holder, for the free end (22) of the spring leg (13) is formed so as to be offset radially inwards in the direction of the wheel rotation axis D and axially recessed on the holding arm (7) or web (9) on the counterbearing (24).

7. Friction lining assembly (5) according to Claim 6, **characterized in that** the free end (22) of the spring leg (13) rests on the counterbearing (24) by means of the seat, **in that** the counterbearing (24) and/or the seat are/is of a raised design in at least one direction, and wherein the spring leg (13) engages at least partially over the counterbearing (24).

8. Friction lining assembly according to one or more of the preceding claims, **characterized in that** the restoring spring (10) is formed by cold work-hardening, at least sectionally as a result of cold forming the steel sheet material.

9. Friction lining assembly according to one or more of the preceding claims, **characterized in that**, for the purpose of releasable fixing on the backing plate (14), the restoring spring (10) contains an elastic fastening clip which has at least a part of the spring leg (13), a sliding shoe (15) and a holding tab (16), and wherein the fastening clip engages at least partially around and resiliently clamps the backing plate (14).

10. Friction lining assembly according to one or more of the preceding claims, **characterized in that** the restoring spring (10) is designed as a substantially cuboidal flat sheet-metal blank having a laterally open notch (21) which extends centrally approximately along an axis of symmetry, with the result that the notch (21) defines two connected, mutually parallel spring legs (13a, b) of approximately equal thickness.

11. Friction lining assembly according to one or more of the preceding claims, **characterized in that** the spring leg (13) is arranged in a recessed manner in a niche (23) of the housing (3) after installation.

12. Friction lining assembly according to one or more of the preceding claims, **characterized in that** the spring leg (13) is twisted in a meandering shape, such as, in particular, curved in a double-S shape, and is oriented substantially parallel to the backing plate (14) in the tangential direction T, and wherein the fastening clip is fixed to the backing plate (14) at a distal end of the claw (6).

13. Sliding-calliper disc brake having a brake holder (2) and a housing (3) and comprising a friction lining assembly (5) having a restoring spring (10), incorporating the features of one or more of the preceding Claims 1-12, **characterized in that** the spring leg (13) of the restoring spring (10), that can be deformed in a controlled elastoplastic manner, is clamped between the backing plate (14) of the friction lining assembly (5) and the brake holder (2) in such a way that a constantly dimensioned release clearance is automatically and permanently imposed on the friction lining assembly (5).

## Revendications

1. Ensemble (5) de garniture de frottement présentant une plaque dorsale (14) sur laquelle est fixé un ressort de rappel (10) en tôle, pour un frein (1) à disque à garniture partielle pour véhicule automobile, de type à étrier flottant, équipé d'un support de frein (2) fixé sur le véhicule, et dans lequel des ensembles (5) de garniture de frottement sont guidés à coulissement sur les deux côtés d'un disque de frein, l'ensemble présentant un logement (3) qui chevauche le disque de frein et les ensembles (5) de garniture de frottement et qui est monté à coulissement sur le support de frein (2), le ressort de rappel (10) pouvant être serré axialement entre le support de frein (2) et l'ensemble (5) de garniture de frottement par une ou plusieurs lames de ressort (13) en appliquant le ressort de rappel (10) contre l'ensemble (5) de garniture de frottement avec un jeu, **caractérisé en ce que** la lame de ressort (13) chevauche un patin (6) en forme de tête de marteau de la plaque dorsale (14), le patin (6) en forme de tête de marteau est tiré par le support de frein (2) dans un profilé de guidage (8), c'est-à-dire qu'elle s'appuie sur le patin (6) en étant tirée et suspendue, de sorte qu'il existe ainsi une contrainte de traction dans la plaque dorsale (14), et **en ce que** la lame de ressort (13) est configurée de manière à être plastiquement déformable de façon définie suite à la réduction de l'épaisseur du matériau de frottement qui découle de l'utilisation du frein, de telle sorte que l'amplitude du jeu de l'ensemble (5) de garniture de frottement reste constante et **en ce que** par l'intermédiaire d'une profilation (18), notamment par une ou plusieurs moulures et/ou une ou plusieurs perforations (17), le comportement élasto-plastique du matériau de la tôle d'acier de la lame de ressort (13) diffère d'une section à l'autre.

2. Ensemble (5) de garniture de frottement selon la revendication 1, **caractérisé en ce que** la lame de ressort (13) chevauche le centre Z du patin (6).

3. Ensemble (5) de garniture de frottement selon les revendications 1 ou 2, **caractérisé en ce que** la lame de ressort (13) présente une extrémité libre (22) qui repose directement et sous contrainte élastique sur le contre-palier (24) du support de frein (2).

4. Ensemble (5) de garniture de frottement selon l'une ou plusieurs des revendications 1 à 3 qui précèdent, **caractérisé en ce que** le ressort de rappel (10) présente des axes de flexion B, B', B" prévus pour assurer la flexion mutuellement parallèle de la lame de ressort (13), la patte de maintien (16), le patin coulissant (15), la lame de fixation (20) du ressort de rappel (10).

5. Ensemble (5) de garniture de frottement selon la revendication 4, **caractérisé en ce que** les axes de flexion B, B', B" sont alignés tangentiellement.

6. Ensemble (5) de garniture de frottement selon l'une ou plusieurs des revendications 3 à 5 qui précèdent, **caractérisé en ce qu'**un siège prévu côté support pour l'extrémité libre (22) de la lame de ressort (13) est décalé radialement vers l'intérieur en direction de l'axe de rotation D de la roue et est abaissé axialement sur le bras de maintien (7) ou l'entretoise (9) de maintien prévue sur le contre-palier (24).

7. Ensemble (5) de garniture de frottement selon la revendication 6, **caractérisé en ce que** l'extrémité libre (22) de la lame de ressort (13) repose par le siège sur le contre-palier (24), **en ce que** le contre-palier (24) et/ou le siège sont rehaussés dans une ou plusieurs directions et **en ce que** le contre-palier (24) est chevauché au moins en partie par la lame de ressort (13).

8. Ensemble de garniture de frottement selon l'une ou plusieurs des revendications qui précèdent, **caractérisé en ce que** au moins certaines parties du ressort de rappel (10) sont renforcées à froid par façonnage à froid du matériau de la tôle d'acier.

9. Ensemble de garniture de frottement selon l'une ou plusieurs des revendications qui précèdent, **caractérisé en ce que** pour permettre sa fixation libérable sur la plaque dorsale (14), le ressort de rappel (10) contient une pince élastique de fixation qui comprend au moins une partie de la lame de ressort (13), un patin coulissant (15) et une patte de retenue (16), la pince de fixation chevauchant élastiquement au moins en partie la plaque dorsale (14).

10. Ensemble de garniture de frottement selon l'une ou plusieurs des revendications qui précèdent, **caractérisé en ce que** le ressort de rappel (10) est configuré comme flan de tôle essentiellement en forme de parallélépipède droit doté d'une entaille (21) ouverte latéralement et s'étendant sensiblement le long d'un axe central de symétrie de telle sorte que l'entaille (21) définisse deux lames de ressort (13a, b) reliées l'une à l'autre, parallèles l'une à l'autre et sensiblement de même épaisseur.

11. Ensemble de garniture de frottement selon l'une ou plusieurs des revendications qui précèdent, **caractérisé en ce que** après montage, la lame de ressort (13) est enfoncée dans une niche (23) du logement (3).

12. Ensemble de garniture de frottement selon l'une ou plusieurs des revendications qui précèdent, **caractérisé en ce que** la lame de ressort (13) est enroulée en méandres, par exemple cintrée en forme de double S, et orientée dans la direction tangentielle T, essentiellement en parallèle à la plaque dorsale (14), la pince de fixation étant fixée sur la plaque dorsale (14) à une extrémité distale du patin (6).

13. Frein à disque à étrier flottant présentant un support de frein (2) et un logement (3) ainsi qu'un ensemble (5) de garniture de frottement doté d'un ressort de rappel (10), le tout selon les caractéristiques d'une ou plusieurs des revendications 1 à 12, **caractérisé en ce que** la lame de ressort (13) du ressort de rappel (10), élasto-plastiquement déformable de manière contrôlée, est serrée entre la plaque dorsale (14) de l'ensemble (5) de garniture de frottement et le support de frein (2) de telle sorte qu'un jeu maintenu constant de manière permanente soit conféré à l'ensemble (5) de garniture de frottement.
